# EUROPEAN PATENT APPLICATION

(11) **EP 2 351 637 A1**
(43) Date of publication of application: **03.08.2011**
(21) Application number: 09824573.1
(22) Date of filing: 30.10.2009
(51) Int. Cl.: B29B 13/00, B29C 45/17, B29C 47/08, B29L 7/00

(54) **RESIN PELLET CLEANING METHOD**

(30) Priority: 05.11.2008 JP 2008283999
(71) Applicant: Du Pont-Mitsui Polychemicals Co., Ltd., Tokyo 105-7117 (JP)
(72) Inventor: SASAI, Izumi, Ichihara-shi Chiba 299-0108 (JP)
(74) Representative: Gulde Hengelhaupt Ziebig & Schneider
(86) International application number: PCT/JP2009/005772
(87) International publication number: WO 2010/052872

(57) **Abstract**

Disclosed is a method for producing a resin film or a resin sheet comprising a step of cleaning resin pellets and a step of forming the resin film or the resin sheet by using the cleaned resin pellets. The step of cleaning the resin pellets comprises a step of introducing the resin pellets and water into a first tube body, and a step of conveying the resin pellets and the water toward a discharge opening in the first tube body, and cleaning the resin pellets by removing foreign matters from the surfaces of the resin pellets by water flow.

## Description

### TECHNICAL FIELD

The present invention relates to a method for cleaning resin pellets.

### BACKGROUND ART

In the past, there has been a problem of the mixing of foreign matters into a resin molded product. Foreign matters are produced as peculiar forms in a resin molded product, and become, for example, fish eyes for a film or a sheet, and bumps for an injection molded product or an extrusion coating molded product. Incidentally, fish eyes are coarse particles in which foreign matters are aggregated to form nuclei in the film.
The presence of such foreign matters causes various problems.

For example, when a film (sheet) is used for optical purposes, optical properties are affected by fish eyes in some cases. Furthermore, when a film (sheet) is mounted on an electronic equipment or the like prior to use, it is also considered that breakdown caused by fish eyes easily occurs, thus affecting electrical properties.
Furthermore, when fish eyes are present, the appearance becomes poor, resulting in reduction of the value as a product.
Also, when bumps are formed in other molded products such as an injection molded product and the like, as well as in a film or a sheet, the appearance becomes worsened, resulting in causing problems such that desired electrical properties and optical properties are hardly exhibited and the like.
Here, the film and the sheet are distinguished. However, in Japan, a material having a thickness of not more than 200 µm is generally called a film in many cases, while in JIS glossary of terms for packing and in Europe and America, a material having a thickness of not more than 10 mil (250 µm) is taken as a film. However, when flexibility of a material capable enough to roll up into a roll shape is maintained, the material is sometimes called a film though it is a little thick. So, here, a material having a thickness thinner than the range of 200 to 300 µm as the boundary is called a film, while a material thicker than the range is called a sheet.

Then, for example, Patent Document 1 discloses a method for reducing fish eyes by devising the composition of a resin.

### PRIOR ART REFERENCES

### PATENT DOCUMENTS

Patent Document 1: Japanese Patent Laid-Open Publication No. 2007-031475
Patent Document 2: Japanese Patent Laid-Open Publication No. 1997-263629
Patent Document 3: Japanese Patent Laid-Open Publication No. 2002-3606
Patent Document 4: Japanese Patent Laid-Open Publication No. 1995-216115
Patent Document 5: Japanese Patent Laid-Open Publication No. 1996-132541
Patent Document 6: Japanese Patent Laid-Open Publication No. 2005-161779

### DISCLOSURE OF THE INVENTION

However, in the method described in Patent Document 1, since the composition of the resin must be changed, it is hard to reduce fish eyes at the time of processing a film using the existing resin pellets.

According to the present invention, there is provided a method for cleaning resin pellets, comprising: introducing the resin pellets and water into a first tube body; and conveying the resin pellets and the water toward a discharge opening in the first tube body, and simultaneously cleaning the resin pellets by removing foreign matters from the surfaces of the resin pellets by water flow.

According to the present invention, the resin pellets are supplied into the first tube body along with water, thus to be conveyed toward the discharge opening in the first tube body, and simultaneously the foreign matters attached to the surfaces of the resin pellets are removed by the water flow.
Thus, when a film (sheet) or other molded product is formed using the resin pellets cleaned according to the cleaning method of the present invention, generation of fish eyes or bumps (hereafter sometimes referred to as fish eyes or the like) can be suppressed.

Furthermore, according to the present invention, generation of fish eyes or the like can be suppressed by cleaning resin pellets, so that fish eyes or the like can also be reduced at the time of processing a film (sheet) or other molded product using the existing resin pellets.

Furthermore, in the present invention, since resin pellets and water are conveyed toward the discharge opening in the first tube body in the cleaning step, it is possible to suppress the presence of resin pellets in the first tube body for a long period of time. In other words, it is possible to prevent immersion of the resin pellets in water for a long period of time, an increase in the amount of water content in resin pellets, and a swell of the resin pellets.

In the present invention, since water is used as a cleaning liquid for cleaning resin pellets, the safety is quite high.
Also, in the present invention, since foreign matters are removed from the surfaces of the resin pellets by water flow, it is possible to prevent deformation of the shape caused by grinding of the resin pellets.

Here, in the step of cleaning the resin pellets, it is preferable that the water is supplied into the first tube body in an amount of not more than 80% by weight, based on the weight of the resin pellets.

By setting the weight of water to not more than 80% by weight based on the weight of the resin pellets, the resin pellets easily collide with each other. Thus, the foreign matters firmly attached to the surfaces of the resin pellets are easily removed from the surfaces of the resin pellets.
Accordingly, it is possible to provide resin pellets which can more reliably reduce the occurrence of defects such as fish eyes or the like.

As described above, in the aforementioned step of cleaning resin pellets, it is preferable to remove the foreign matters attached to the surfaces of the resin pellets by the water flow and the collision of the resin pellets with each other in the first tube body.

Furthermore, the first tube body may be equipped with a first screw for conveying and stirring the water and the resin pellets, and a stirring blade connected to the first screw. The resin pellets and water may be stirred by the rotation of the first screw and the stirring blade in the first tube body.

On the other hand, the first tube body may be formed in a conical trapezoidal including a pair of circular surfaces facing each other which are opened and composed of a large opening and a small opening. The first tube body may be arranged such that the large opening is arranged on the upper side and the small opening is arranged on the lower side. In the cleaning step, water may be supplied helically along the inner wall of the first tube body to generate a vortex flow, and the resin pellets may be supplied into the first tube body.
More specifically, the first tube body takes a conical trapezoidal form, and is provided with the large opening arranged in an upward direction and the small opening arranged in a downward direction. Then, the resin pellets are supplied from the large opening arranged in an upward direction, and water is supplied at a high speed along the inner wall (the conical surface) of the first tube body. Water flows helically in a downward direction along the inner wall of the first tube body, thus turning into a cyclone-like state for producing a vortex flow. Then, while the resin pellets are rolled in the vortex flow, and resin pellets and water are stirred, resin pellets and water are discharged from an outlet of the small opening disposed on the lower side.
The site where resin pellets are fed may be in the vicinity of the center as viewed from right above the large opening, but resin pellets may be supplied to be eccentric so as to be close to the inner wall surface of the conical tube body. When resin pellets are supplied to be eccentric, an effect of cleaning is increased since resin pellets are brought into contact with the water flow flowing along the inner wall surface from the early stage.

Furthermore, it is preferable to include a step in which the resin pellets and water discharged from the aforementioned first tube body are supplied into the second tube body equipped with a screw, and in the above second tube body, the resin pellets and water are conveyed by the screw, and the resin pellets and the water are separated by the centrifugal force produced by the rotation of the second tube body. The second tube body is preferably composed of a porous material having a large number of pores smaller than the size of resin pellets so as to allow water thus separated to escape from the inside of the tube body.

In the second tube body, the resin pellets and water are separated by the centrifugal force in the second tube body, so that the resin pellets and water containing foreign matters are separated from each other.

Furthermore, it is preferable to remove water content remained in the resin pellets by further drying the resin pellets separated from water.

Here, as the resin pellets, all resin pellets can be applied, but particularly preferably used are sticky resin pellets.

Since foreign matters are easily attached to the sticky resin pellets, an effect of the present invention is clearly exhibited.
Stickiness mentioned herein refers to feeling of stickiness when resin pellets are touched with a finger. For example, stickiness of resin pellets of an ethylene-α-olefin copolymer rubber, a propylene-α-olefin copolymer rubber, an ethylene-propylene-diene copolymer rubber, an ethylene-vinyl acetate copolymer or the like can be felt. On the other hand, stickiness is not felt from a high density polyethylene or propylene homopolymer, a carbonate resin and polyethylene terephthalate.
The cleaning method as described above is particularly suitable for reducing fish eyes produced in a sheet or a film. The sheet or the film is formed by using the resin pellets cleaned according to the aforementioned cleaning method, whereby the number of fish eyes (greater than a diameter of 0.2 mm) produced in the sheet or the film can be not more than 60 per 1 m².

Furthermore, according to the present invention, it is also possible to provide a method for filling resin pellets comprising a step of cleaning (co)polymer resin pellets produced by a polymerization process according to the method for cleaning resin pellets as set forth in any one of the methods described above before filling in a transportation container, and a step of filling the cleaned resin pellets in the transportation container.
The resin pellets are cleaned according to the aforementioned cleaning method, whereby foreign matters attached to the resin pellets can be removed before filling in the transportation container.
Thus, when resin pellets are formed at a transport company, generation of fish eyes or the like can be suppressed.
The aforementioned (co)polymer pellets are preferably resin pellets of an ethylene copolymer produced by a high-pressure polymerization process.
It is particularly effective to clean the resin pellets of an ethylene copolymer produced by a high-pressure polymerization process according to the aforementioned cleaning method because they are relatively highly sticky.
A typical example of highly sticky resin pellets of an ethylene copolymer produced by a high-pressure polymerization process includes an ethylene-vinyl acetate copolymer. Since particularly resin pellets having the content of vinyl acetate of not less than 20% by mass are remarkably sticky, it is effective to clean them according to the cleaning method of the present invention.

Meanwhile, according to the present invention, there is also provided a method for analyzing resin pellets, comprising: supplying at least a part of resin pellets produced in resin pellets manufacturing apparatus to a cleaning device connected to the manufacturing apparatus, and cleaning the resin pellets in the cleaning method as set forth in any one of the cleaning methods described above; and supplying the resin pellets to an analyzing device connected to the cleaning device, and analyzing the resin pellets with the analyzing device.
In order to make sure properties of the produced resin pellets, resin pellets are analyzed in some cases. At this time, when foreign matters are attached to resin pellets, original properties of resin pellets are hardly measured in some cases. For example, a film (sheet) is formed from resin pellets and physical properties of the film (sheet) are measured to confirm whether resin pellets having desired properties can be produced or not. At this time, when foreign matters generated during conveyance of resin pellets to the analyzing device after the production of resin pellets are mixed, fish eyes are formed and observed, thus deteriorating physical properties of the film (sheet). Thus, it is difficult to determine whether the desired resin pellets can be produced or not.
In response to this, in the present invention, since resin pellets are analyzed using the analyzing device after resin pellets are cleaned, such a problem can be solved.

Furthermore, according to the present invention, it is also possible to provide a method for forming a resin, wherein resin pellets are cleaned in the cleaning method as set forth in any one of the cleaning methods described above, and thereafter the resin pellets are supplied to a melt molding device for forming resin pellets.
According to the method for forming a resin, in addition to foreign matters generated from the time of production of resin pellets until they are filled in the transportation container, foreign matters generated in the course of conveyance from a resin pellet manufacturing company to a molding company and foreign matters generated until resin pellets received by the molding company are set to a melt molding device can be removed.
Thus, a film or a molded product in which generation of fish eyes or bumps are suppressed can be obtained.
Accordingly, regardless of whether resin pellets are cleaned in advance or not, a melt molded product of a resin suitable for all resin pellets and with greatly reduced fish eyes can be produced.
Here, the melt molding device may be designed for molding an optical film or an optical sheet, or for molding a coating material for an electric wire.
Furthermore, the above melt molding device may be an extrusion molding device or an injection molding device.

According to the present invention, there is provided a method for cleaning resin pellets which can reduce the occurrence of defects typically such as fish eyes.

### BRIEF DESCRIPTION OF THE DRAWINGS

The above and other objects, features and advantages will be apparent from the following detailed description of the preferred embodiments in conjunction with the accompanying drawings.

Fig. 1 is a view illustrating a cleaning device according to a first embodiment of the present invention.
Fig. 2 is a view illustrating a main section of the cleaning device.
Fig. 3 is a view illustrating a cleaning device and an extrusion molding machine.
Fig. 4 is a view illustrating a cleaning device according to a second embodiment of the present invention.
Fig. 5 is a view according to a modified example of the present invention.
Fig. 6 is a view illustrating the number of fish eyes per film in Example 1.
Fig. 7 is a view illustrating the number of fish eyes per film in Comparative Example 1.

### BEST MODE FOR CARRYING OUT THE INVENTION

### First Embodiment

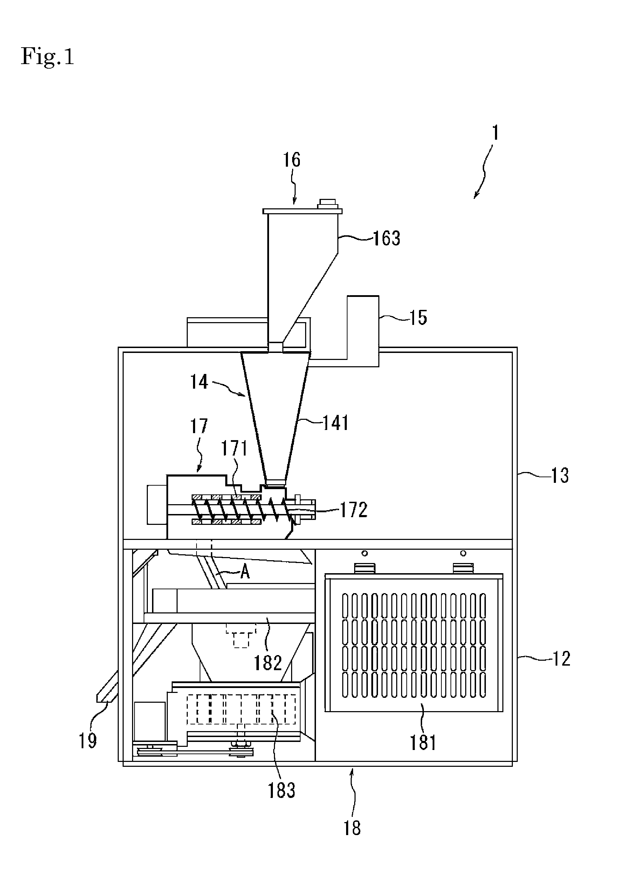

The embodiments of the present invention will be described in conjunction with the drawings below.
First, a summary of this embodiment will be described with reference to Fig. 1.
The method for cleaning resin pellets according to this embodiment comprises a step of introducing the resin pellets and water into a first tube body 141, and a step of conveying the resin pellets and the water toward a discharge opening in the first tube body 141, and simultaneously cleaning the resin pellets by removing foreign matters from the surfaces of the resin pellets by water flow.
The resin pellets thus cleaned are processed into a film (sheet).

Here, the resin pellets to be cleaned are pellets used for molding a film (sheet).
Foreign matters on the surfaces of the resin pellets refer to substances caused, for example, by powdery matters produced by breaking of other resin pellets or pellets different from the aforementioned resin pellets, powdery matters produced by breaking of resin pellets or pellets of the same kind as the aforementioned resin pellets but having different molecular weights and compositions, dust of fiber or the like, rust in a pipe and the like.

Hereinafter, the method for cleaning resin pellets of this embodiment will be described in detail with reference to Fig. 1.
Fig. 1 illustrates a cleaning device 1 for resin pellets to carry out the method for cleaning resin pellets of this embodiment.

The cleaning device 1 is provided with a lower machine frame 12 and an upper machine frame 13 arranged on the lower machine frame 12.
In the upper machine frame 13, there are arranged a cleaning unit 14, a water supply unit 15 for supplying water into the cleaning unit 14, a resin pellet supply unit 16 for supplying resin pellets to the cleaning unit 14, and a centrifugal dewatering unit 17.

The water supply unit 15 is to supply water into the first tube body 141 in the cleaning unit 14 to be described below. The water supply unit 15 is connected to the upper part of the conical surface (side wall) of the first tube body 141. Water to be supplied here is preferably pure water. Further, in this embodiment, water is used as a cleaning liquid of resin pellets, and a liquid other than water is not used. That is, the cleaning liquid is composed of water.

The resin pellet supply unit 16 is to supply resin pellets into the first tube body 141, and is provided with a hopper 163 connected to the upper part of the first tube body 141.

In the hopper 163, though not illustrated, a pipe is connected in order to supply resin pellets into the hopper 163. The resin pellet supply device is connected to the front end of this pipe in order to supply resin pellets to the cleaning device 1.

The cleaning unit 14 is provided with the first tube body 141 in a conical trapezoidal form.
The first tube body 141 comprises openings consisting of an upper end surface and a lower end surface which are opened. The first tube body 141 is disposed so as to have a large opening having a large diameter on the upper side and a small opening having a small diameter on the lower side of these openings.
The hopper 163 is connected to the large opening.
Furthermore, water is supplied to the first tube body 141 from the water supply unit 15. The water flows helically from the top to the bottom along the inner wall (the conical surface) of the first tube body 141. At this time, since water is supplied from the water supply unit 15 at a high speed, a vortex flow is produced in the first tube body 141. Then, while the resin pellets supplied from the hopper 163 are rolled in the vortex flow, the resin pellets are conveyed up to the discharge opening in the first tube body 141, that is, the small opening.
Here, the surface of each member with which the resin pellets in the cleaning unit 14 are in contact, specifically, the inner wall of the first tube body 141, is composed of a smooth surface having an extremely small surface roughness, and resin pellets are not ground by the member constituting the cleaning unit 14.
Meanwhile, the member constituting the cleaning unit 14 is composed, for example, of a metal such as stainless steel, aluminum or the like.

The centrifugal dewatering unit 17 is provided with the second tube body 171 designed to be rotatable and a screw 172 arranged in the second tube body 171.

A part of the second tube body 171 is composed of a porous member, and water is discharged from pores of the porous member. Incidentally, the pore of the porous member is smaller than the particle size of the resin pellets, and greater than the diameter of foreign matters attached to the resin pellets.

Hereinafter, the configuration of the inside of the lower machine frame 12 will be described.
A drying unit 18 is arranged inside the lower machine frame 12.
The drying unit 18 is to dry the resin pellets subjected to centrifugal dewatering in the centrifugal dewatering unit 17. This drying unit 18 is provided with a dryer 181 equipped with a heater (a heat source is electricity, steam, warm water, infrared light or the like), a mount 182 on which resin pellets are mounted, and a suction fan 183.

A plurality of pores having a diameter smaller than that of the resin pellets are formed on the mount 182. Air supplied from the dryer 181 toward the mount 182 functions to dry the resin pellets, and is sucked by means of the suction fan 183. As the mount 182, for example, a net can be used.

Furthermore, a conveyance pipe A connected to the tube body 171 in the centrifugal dewatering unit 17 is connected to the mount 182, and the resin pellets are supplied from the tube body 171 through the conveyance pipe A.

The resin pellets after completion of drying by the drying unit 18 are discharged to the outside of the cleaning device 1 through a discharge unit 19.

Next, the method for cleaning resin pellets using the cleaning device 1 as described above will be described.
First, resin pellets are put into the hopper 163. The resin pellets are supplied to the first tube body 141 through the hopper 163, and the resin pellets are falling into the first tube body 141.

On the other hand, water is supplied into the first tube body 141 from the water supply unit 15.
Here, the amount of water supplied to the first tube body 141 is preferably not more than 80% by weight, based on the weight of the resin pellets. The amount of water is particularly preferably not more than 70% by weight and further preferably not more than 60% by weight, based on the weight of the resin pellets.
By setting the amount of water to not more than 80% by weight based on the weight of the resin pellets, generation of fish eyes or bumps can be reliably suppressed.
Furthermore, in the step of dewatering and drying as a post-step of cleaning, water content attached to resin pellets can be substantially fully removed with a small amount of energy in a short period of time. "Substantially" mentioned herein refers to an amount not to have influence on foaming caused by the water content at the time of melt molding without deteriorating handling of the resin pellets.

The lower limit of the amount of water supplied is preferably not less than 10% by weight, more preferably not less than 30% by weight and particularly preferably not less than 40% by weight, based on the weight of resin pellets.
By setting the amount of water to not less than 10% by weight based on the weight of resin pellets, resin pellets are easily cleaned by water flow.

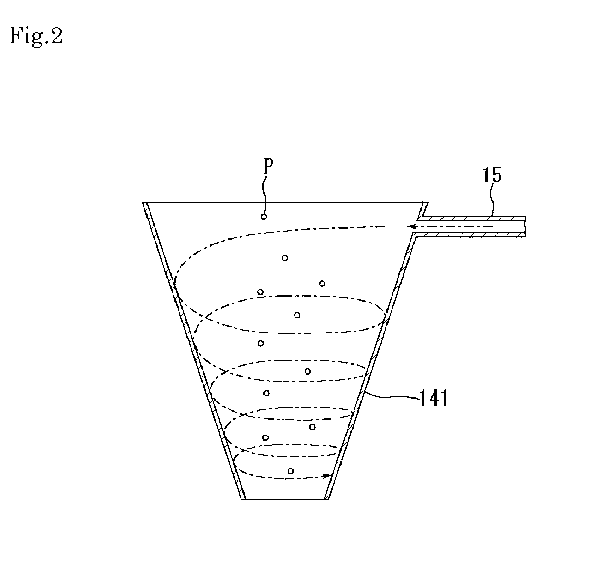

As illustrated by an arrow in Fig. 2, water flows helically downward along the inner wall of the first tube body 141. Since water is supplied at a high speed, a vortex flow is produced. Then, while the resin pellets are rolled in the vortex flow, and resin pellets and water are stirred, resin pellets and water are conveyed to the discharge opening in the first tube body 141. Namely, the resin pellets and water are conveyed toward the discharge opening in the first tube body 141 with stirring. Also, in Fig. 2, P refers to resin pellets.
Water functions to remove foreign matters attached to the surfaces of the resin pellets by the force of the water flow generated at this time. Furthermore, foreign matters firmly attached to the surfaces of the resin pellets are removed from the surfaces of the resin pellets by the collision of the resin pellets with each other.
In this step, even though foreign matters sticked to the resin pellets are removed, the resin pellets themselves are not ground. Accordingly, the size and shape of the resin pellets cleaned using the cleaning device 1 of this embodiment are the same as those of resin pellets before and after cleaning, and the shape is not deformed by the action of cleaning.

In this cleaning step, a period of staying of resin pellets in the first tube body 141 is, for example, for 1 minute or less, preferably for 30 seconds or less, and further preferably for 15 seconds or less, or it can be within several seconds if improvement of the productivity is desired. In this cleaning step, resin pellets are not swollen.
Furthermore, the site where resin pellets are fed may be in the vicinity of the center as viewed from right above the large opening, but resin pellets may be supplied so as to be eccentric to the inner wall surface side of the first tube body 141, rather than the center of the large opening. When resin pellets are supplied so as to be eccentric, an effect of cleaning is increased since resin pellets are brought into contact with the water flow flowing along the inner wall surface from the early stage.

Next, the water and resin pellets discharged from the discharge opening in the first tube body 141 are supplied into the second tube body 171 in the centrifugal dewatering unit 17.

In the second tube body 171, the resin pellets and water are moved in the horizontal direction by the rotation of the screw 172. At this time, the resin pellets and water are affected by the action of the centrifugal force due to the rotation of the second tube body 171.

The resin pellets and water are affected by the action of the centrifugal force due to the rotation of the second tube body 171, and water and resin pellets are moved to the porous member side in the second tube body 171. Water is discharged to the outside through the pores of the porous member. Incidentally, foreign matters are discharged through the pores of the porous member along with water.

Subsequently, the resin pellets are moved in the second tube body 171 by the rotation of the screw 172, and are discharged from the second tube body 171. The resin pellets discharged from the second tube body 171 are supplied to the mount 182 in the drying unit 18 through the conveyance pipe A. Warm air is supplied from the dryer 181 in the drying unit 18 for drying resin pellets.
Thereafter, the resin pellets are discharged from the cleaning device 1 through the discharge unit 19.

Meanwhile, in the cleaning device 1, a raw material of resin pellets to be cleaned is not particularly limited, but preferably used are sticky resins. Preferable examples thereof include any resins selected from a copolymer with ethylene and α-olefin other than ethylene having the content of α-olefin of not less than 5% by mole and particularly not less than 10% by mole; a copolymer with propylene and α-olefin other than propylene; an ethylene-propylene-diene copolymer rubber; and an ethylene-vinyl acetate copolymer having the content of vinyl acetate of not less than 20% by mass and particularly not less than 25% by mass.
Since all of these resins are highly sticky and foreign matters are easily attached thereto, it is particularly preferable to clean resin pellets according to the cleaning method of this embodiment.
An ethylene (co)polymer produced using a metallocene catalyst has also been used for the purpose of higher transparency, stronger mechanical strength and utilizing optical properties, as compared to a polymer produced using the existing Ziegler catalyst. For this reason, it is preferable that pellets composed of this resin material are cleaned by the cleaning method of the present invention, whereby an influence by foreign matters such as fish eyes or the like can be suppressed to a requisite minimum value.

As other preferable resin pellet materials, an ethylene-unsaturated carboxylic acid copolymer, an ethylene-unsaturated carboxylic acid-unsaturated carboxylic acid ester copolymer, a metal salt of these copolymers, a (meth) acrylic resin, a carbonate resin and the like are also sticky, or are used for those having optical properties. To this effect, it is particularly preferable to clean resin pellets by the cleaning method of the present invention.

Furthermore, resin pellets to be cleaned may be pellets of an ethylene copolymer produced by a high-pressure process. The ethylene copolymer produced by a high-pressure polymerization process has lower crystallinity, as compared to those produced by a medium- and low-pressure process. For this reason, a product excellent in transparency and electrical properties can be produced so that a resin suitable for optical purposes or for an electrical insulating material can be produced. However, a measure to prevent attachment of foreign matters in and out of the system (rust in a pipe, dust floating in the air, waste fiber and the like) is required because of relatively high stickiness. For this reason, it is possible to take an effective measure at a relatively low cost by use of the cleaning method of this embodiment.

Furthermore, resin pellets are preferably used for optical films, optical sheets or electric (semiconductor) materials such as an insulating material for an electric wire and the like. When resin pellets are used for an optical film (sheet), fish eyes as a factor of damage on the optical properties such as transparency or the like are reduced, so that a film excellent in optical properties can be produced. When resin pellets are used for an electric (semiconductor) material, fish eyes as a factor of breakdown are reduced, so that a product having high insulation resistance can be produced.
Specific examples of the optical film include constituent members of various displays such as a deflection sheet, a color filter and the like, sealing materials for solar cells, and the like.
It is also preferable to apply various members to resin pellets for producing protective films for other applications. When fish eyes are present in a protective film, the surface of a base material to be protected is damaged, and sticky properties of the protective film are lowered. So, the adverse effects therefrom can be eliminated.
Furthermore, resin pellets having a particle size of not less than 1 mm and not more than 5 mm in general are granular. In case of resin pellets having a particle size in this range, certain effects can be expected. However, the particle size is not restricted as long as the advanced cleaning effect is obtained by the method of the present invention.

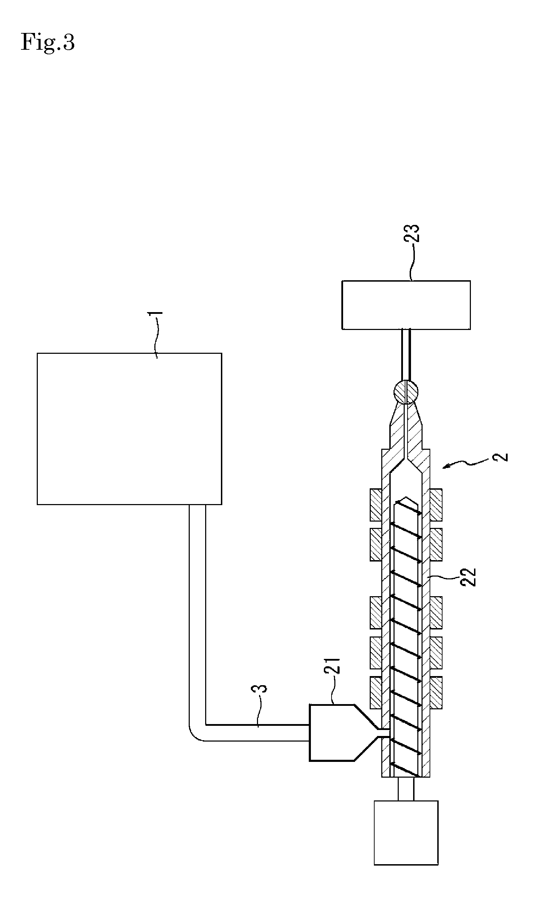

Here, as shown in Fig. 3, if the cleaning device 1 and the melt molding device (here, a film molding machine (an extrusion molding machine 2)) are connected by means of a pipe 3, a film (sheet) can be produced by supplying the resin pellets cleaned using the cleaning device 1 to the extrusion molding machine 2.
In the extrusion molding machine 2 of Fig. 3, the numeral 21 refers to a hopper, and the numeral 22 refers to a main body of the extrusion molding machine. Also, the numeral 23 is a die for forming a film (sheet).

Furthermore, the cleaning device 1 and the extrusion molding machine 2 may always be connected by means of the pipe 3, but, for example, when the kind of resin pellets to be molded by the extrusion molding machine 2 is changed, the cleaning device 1 and the extrusion molding machine 2 are connected by means of the pipe 3, and resin pellets of this embodiment may be cleaned.

Next, an operational effect of the embodiment will be described.
In this embodiment, resin pellets are supplied into the first tube body 141 along with water, and foreign matters attached to the surfaces of resin pellets are removed by water flow while conveying the resin pellets and water in the first tube body 141.
Accordingly, when a film (sheet) or other molded product is formed using resin pellets cleaned according to the cleaning method of this embodiment, generation of fish eyes or bumps can be suppressed.
For example, when a film (sheet) is formed using resin pellets cleaned according to the cleaning method of this embodiment, the number of foreign matters such as fish eyes having a diameter of not less than 0.2 mm can be not more than 60 per 1 m², further preferably not more than 35 per 1 m², and particularly preferably not more than 20 per 1 m².

Furthermore, since generation of fish eyes or bumps can be suppressed by cleaning resin pellets, fish eyes or bumps can also be reduced at the time of processing a film (sheet) using the existing resin pellets.

In this embodiment, since resin pellets and water are conveyed toward the discharge opening in the first tube body 141 in the cleaning step, it is possible to suppress resin pellets present in the first tube body 141 for a long period of time. In other words, it is possible to prevent resin pellets from being immersed in water for a long period of time, increasing the amount of the water content in resin pellets, and swelling the resin pellets.
If the amount of the water content in the resin pellets is high, water is vaporized and foamed, thus causing defects to a molded product such as a film or the like during formation of the molded product such as a film or the like in some cases. However, in this embodiment, generation of such defects can be suppressed.

Since water is used as a cleaning liquid for cleaning resin pellets, the safety is quite high.
Furthermore, in this embodiment, since foreign matters are removed from the surfaces of the resin pellets by water flow and the collision of the resin pellets with each other, it is possible to prevent grinding of resin pellets and deformation of the shape.

By setting the weight of water to not more than 80% by weight based on the weight of the resin pellets, resin pellets come to be in contact with each other. Thus, foreign matters firmly sticked to the resin pellets are easily removed from the resin pellets.
Accordingly, it is possible to provide resin pellets which can more reliably reduce generation of fish eyes or bumps.

In this embodiment, water is supplied along the inner wall of the first tube body 141 at a high speed, whereby a vortex flow is produced. Resin pellets are rolled in the vortex flow, whereby water and resin pellets are stirred. In this embodiment, since the vortex flow is produced, and a stirring blade or the like are not necessary, the number of members of the cleaning device 1 can be cut down.
When the amount of resin pellets is relatively small, resin pellets are also surely rolled even in the vortex flow produced by supplying water along the inner wall of the first tube body 141 at a high speed and can be fully cleaned. Accordingly, the cleaning device 1 of this embodiment is particularly suitable when resin pellets in a relatively small amount are to be cleaned.

In this embodiment, the second tube body 171 is rotated to produce a centrifugal force, and a part of the second tube body 171 is composed of a porous material, whereby water is discharged through the pores of the porous material, and resin pellets and water are separated. Thus, resin pellets and water containing foreign matters are separated, so that it is possible to prevent reattachment of foreign matters to the resin pellets.

Incidentally, in Patent Document 2, a method for cleaning resin pellets is disclosed, but the method is to remove oligomer contained in resin pellets, a polymerization catalyst and the like by swelling resin pellets with a swelling agent.
Furthermore, a method for cleaning resin pellets is also disclosed in Patent Document 3, but the method is to remove cyclic oligomer in resin pellets. A special solvent for extracting cyclic oligomer is used.
Furthermore, a method for cleaning resin pellets is also disclosed in Patent Document 4, but the method is to remove volatile substances contained in resin pellets using ultrasonic waves.
Also, in Patent Document 5, even though optical materials are cleaned, a specific description is not disclosed.
As described above, in all of Patent Documents 1 to 5, there is disclosed no configuration such that generation of fish eyes or the like is prevented by removing foreign matters or the like attached to the surfaces of resin pellets by water flow while conveying water and resin pellets as disclosed in the present invention, which is not even suggested.
Also, Patent Document 6 discloses that a resin piece for recycling is collided against the rough surface of a cleaning tank for grinding the surface, thus cleaning. The method in Patent Document 6 is a cleaning method by grinding the surface of the resin piece, but fails to remove foreign matters form the surfaces of the resin pellets by water flow.

### Second Embodiment

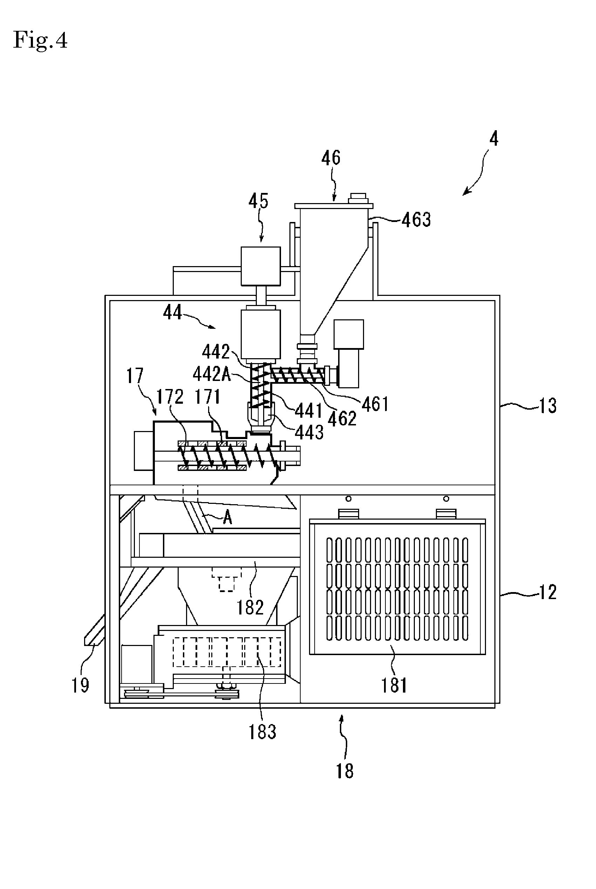

The second embodiment of the present invention will be described with reference to Fig. 4.
A cleaning device 4 of this embodiment is different from the cleaning device 1 of the aforementioned embodiment in its structure of the cleaning unit 44. Furthermore, the installation positions of a water supply unit 45 and a resin pellet supply unit 46 are also different from those of the aforementioned embodiment. The other points are the same as the aforementioned embodiment. Furthermore, resin pellets to be cleaned are also the same as the aforementioned embodiment.
The water supply unit 45 is to supply water into a first tube body 441 in the cleaning unit 44 to be described below. The water supply unit 45 is connected to the upper part of the first tube body 441. Water to be supplied here is pure water. Also, in this embodiment, water is used as a cleaning liquid of resin pellets, and a liquid other than water is not used. That is, the cleaning liquid is composed of water.

The resin pellet supply unit 46 is to supply resin pellets into the first tube body 441, and is equipped with a tube body 461 connected to the first tube body 441 and extending in the horizontal direction from the first tube body 441, a screw 462 arranged inside the tube body 461 and a hopper 463 connected to the tube body 461.

Resin pellets are put into the tube body 461 through the hopper 463, and resin pellets are supplied into the first tube body 441 by the screw 462 in the tube body 461.

The cleaning unit 44 has the first tube body 441 arranged so as to extend in the vertical direction and a first screw 442 arranged in the tube body 441.
The first tube body 441 is composed of the upper side and lower side having equal diameters, and its shape is, for example, a cylindrical shape. Into the first tube body 441, the resin pellets are supplied from the resin pellet supply unit 46, and water is supplied from the water supply unit 45.

The first screw 442 is arranged such that its shaft 442A extends in the vertical direction and is parallel to the center shaft of the first tube body 441. A blade is helically formed in the shaft 442A of the first screw 442, and a stirring blade 443 is connected to the front end of the shaft 442A.

The first screw 442 and the stirring blade 443 are used to stir resin pellets and water in the first tube body 441, and convey them to the discharge opening in the first tube body 441.

Here, all of the surfaces of respective members with which the resin pellets in the cleaning unit 44 are in contact, specifically, the inner surface of the first tube body 441, the surface of the shaft 442A in the first screw 442, the surface of the blade in the first screw 442, and the surface of the stirring blade 443 are composed of a smooth surface having an extremely small surface roughness, and resin pellets are not ground by these members constituting the cleaning unit 44.
In addition, each member constituting the cleaning unit 44 is composed, for example, of a metal such as stainless steel, aluminum or the like.

Next, the method for cleaning resin pellets using the cleaning device 4 as described above will be described.
First, resin pellets are put into the hopper 463. The resin pellets are supplied into the tube body 461 through the hopper 463. In the tube body 461, the resin pellets are conveyed into the first tube body 441 by means of the screw 462 because of the rotational driving of the screw 462.

On the other hand, water is supplied into the first tube body 441 from the water supply unit 45.
Here, the amount of water supplied into the first tube body 441 is the same as that of the aforementioned embodiment.

Next, the first screw 442 and the stirring blade 443 are rotationally driven in the first tube body 441, whereby water and resin pellets are stirred for cleaning the resin pellets.
Water functions to remove foreign matters attached to the surfaces of the resin pellets by the force of the water flow (vortex flow) generated at this time. Furthermore, foreign matters firmly attached to the surfaces of the resin pellets are removed from the surfaces of the resin pellets by the collision of the resin pellets with each other.
In this step, even though foreign matters sticked to the resin pellets are removed, the resin pellets themselves are not ground. Accordingly, the size and shape of the resin pellets cleaned using the cleaning device 4 of this embodiment are the same as those of resin pellets before and after cleaning, and the shape is not deformed by the action of cleaning.

By rotational driving of the first screw 442, water and resin pellets are moved from the top to the bottom of the first tube body 441 with stirring. Then, while water and resin pellets are stirred by means of the stirring blade 443 arranged in the front end of the first screw 442, water and resin pellets are discharged from the discharge opening in the first tube body 441.
In this cleaning step, a period of staying of resin pellets in the first tube body 441 is, for example, for 1 minute or less, preferably for 30 seconds or less, and further preferably for 15 seconds or less, or it can be within several seconds if improvement of the productivity is desired. In this cleaning step, resin pellets are not swollen.

Next, water and resin pellets discharged from the discharge opening in the first tube body 441 are supplied into the second tube body 171 in the centrifugal dewatering unit 17, and are discharged from the cleaning device 4 through the same step as in the aforementioned embodiment.
Then, a film (sheet) can be produced according to the same method as in the first embodiment using the resin pellets discharged from the cleaning device 4.

According to the second embodiment as described above, the following effects can be achieved, in addition to the same effects as in the first embodiment.
In this embodiment, the first screw 442 and the stirring blade 443 are used for stirring to produce a vortex flow. For this reason, even when the amount of resin pellets is relatively large, a vortex flow can be surely produced to reliably perform cleaning of resin pellets.

Incidentally, the present invention is not restricted to the aforementioned embodiments, and modifications, improvements and the like are intended to be included within the scope of the present invention in the ranges in which the object of the present invention can be achieved.
For example, in the aforementioned embodiments, the cleaning device 1 and the extrusion molding machine 2 are directly connected, and all resin pellets cleaned using the cleaning device 1 are processed in the extrusion molding machine 2, but the present invention is not restricted thereto. The resin pellets are cleaned using the cleaning device 1 and further dried using a dryer, and thereafter may be subjected to extrusion molding for forming a film (sheet).

Furthermore, after the production of resin pellets, the resin pellets are cleaned using the cleaning device 1, and the resin pellets may be shipped from a manufacturing plant of resin pellets or the like. Before the resin pellets produced by a resin manufacturing process are filled in a transportation container for conveying from the manufacturing plant to the outside (more specifically, before filling in a container bag), the resin pellets are cleaned by the cleaning method of the present invention and then filled therein. According to this filling method, foreign matters produced in the manufacturing process system are removed, whereby a film (sheet) free from fish eyes or a molded product free from bumps on a surface can be produced by a resin molding process at a transport company. At this time, resin pellets are preferably (co)polymers produced by a polymerization process (for example, ethylene copolymers polymerized by a high-pressure polymerization process).

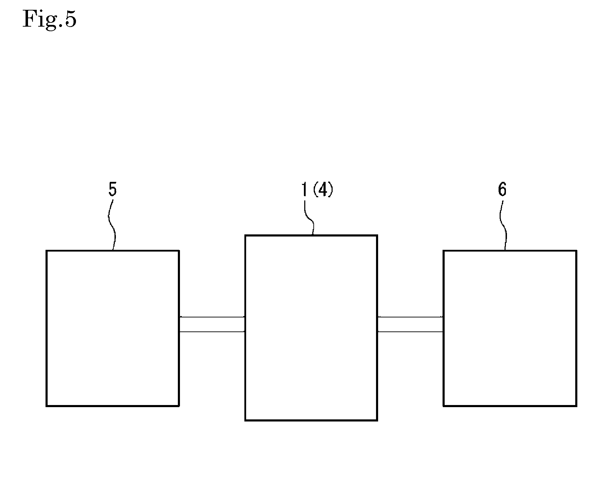

In the aforementioned embodiments, a film (sheet) is, though not restricted to, formed by using the extrusion molding machine 2, and a molded product may be formed by using an injection molding device as a melt molding device. Furthermore, the melt molding device may be used either for an optical film (sheet) or for molding a coating material for an electric wire.
Meanwhile, the cleaning device 1 (4) in respective aforementioned embodiments may be connected to resin pellets manufacturing apparatus 5, as shown in Fig. 5. At this time, resin pellets are partially or totally supplied to the cleaning device 1 (4) from the resin pellets manufacturing apparatus 5. A part of resin pellets cleaned using the cleaning device 1 (4) (the total depending on the situation) is supplied to an analyzing device 6. In the analyzing device 6, properties of resin pellets are evaluated.
For example, in the analyzing device 6, a film (sheet) is formed from resin pellets, and physical properties of the film (sheet) (for example, optical properties) are measured.
Since the resin pellets cleaned using the cleaning device 1 (4) are supplied to the analyzing device 6, original properties of resin pellets can be evaluated.

### EXAMPLES

Hereinafter, Examples of the present invention will be illustrated.

### Example 1

Using a device illustrated in Fig. 3, a film was formed.
A power source of the extrusion molding machine 2 in Fig. 3 was a 3.7-kw inverter motor, while the screw L/D was 24.

The resin pellets were supplied to the extrusion molding machine 2 from a resin pellet supply device (not illustrated) through the cleaning device 1, and a film was formed by means of the extrusion molding machine 2 (step 1). Here, as the resin pellet, an ethylene-vinyl acetate copolymer composition (MFR was 3 g/10 min. measured at 190°C with a load of 2,160 g) having a particle size of 3 mm was used.

Thereafter, a film was formed by means of the extrusion molding machine 2 by changing the kind of the resin pellets using the device illustrated in Fig. 3 (step 2). As the resin pellet, an ethylene-vinyl acetate copolymer composition (MFR was 10 g/10 min. measured at 190°C with a load of 2,160 g) having a particle size of 3 mm was used.

Here, in step 2, the resin pellets were cleaned in the same manner as in the first embodiment. More specific conditions are as follows.

First, resin pellets were supplied to the cleaning device 1 from the aforementioned resin pellet supply device. The resin pellets and water were supplied into the first tube body 141.
At this time, the weight of water was 50% by weight based on the weight of the resin pellets.
Water flowed helically along the inner wall of the first tube body 141, and a vortex flow was produced. Then, the resin pellets were rolled in the vortex flow. While resin pellets and water are stirred, the resin pellets and water were conveyed to the discharge opening in the first tube body 141.
Next, the resin pellets were dewatered using the centrifugal dewatering unit 17, and dried using the drying unit 18.
Thereafter, a film was formed using the extrusion molding machine 2.

The above steps 1 and 2 were repeatedly carried out to obtain a plurality of films in respective steps.

### Comparative Example 1

Here, formation of a film was carried out without employing the cleaning device 1.
First, a supply device for supplying resin pellets and the same extrusion molding machine 2 as in Example 1 were connected to each other, whereby a film was formed by use of the extrusion molding machine 2. Here, as the resin pellet, an ethylene-vinyl acetate copolymer composition (MFR was 3 g/10 min. measured at 190°C with a load of 2,160 g) having a particle size of 3 mm was used (step 3).

Next, a film was formed by means of the extrusion molding machine 2 by changing the kind of the resin pellets. As the resin pellet, an ethylene-vinyl acetate copolymer composition (MFR was 10 g/10 min. measured at 190°C with a load of 2,160 g) having a particle size of 3 mm was used (step 4).

The above steps 3 and 4 were repeatedly carried out to obtain a plurality of films in respective steps.

### Evaluation

The numbers of fish eyes of a plurality of films (58 pieces) obtained in step 2 of Example 1 and fish eyes of a plurality of films (11 pieces) obtained in step 4 of Comparative Example 1 were measured.
Here, foreign matters having a diameter of not less than 0.2 mm were determined as fish eyes.

For the measurement of fish eyes, the following fish eye counter was used.
Fish Eye Counter
A product of FUTEC, Inc.
Measurement:
Film width: 100 mm
Film thickness: 70 to 90 µm
Detection means: CCD Linear Array Image Sensor
The results are shown in Table 1.

**[Table 1]**

| | **Example 1 (per 1 m²)** | **Comparative Example 1 (per 1 m²)** |
|---|---|---|
| **Minimum value ~ Maximum value** | 1 ~ 19 | 63 ~ 1,111 |
| **Average** | 4 | 255 |

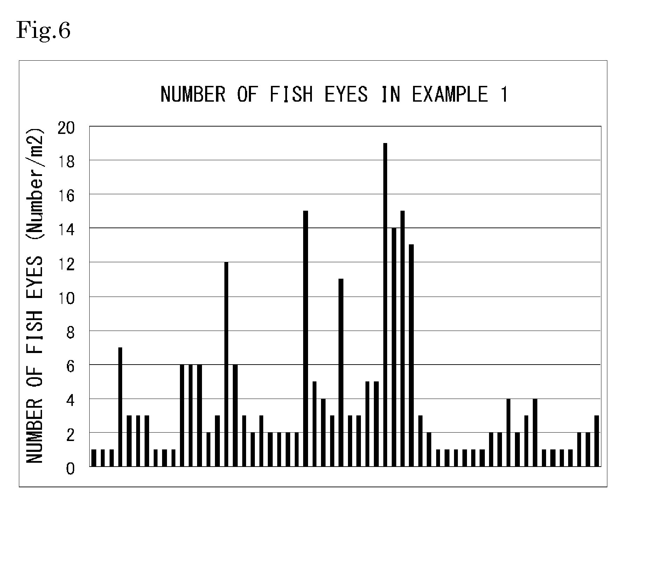

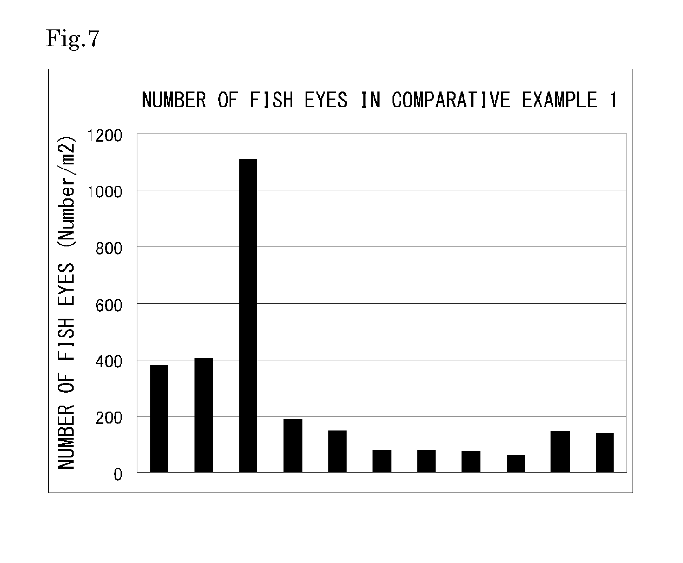

For the numbers of fish eyes in Table 1, the numbers of fish eyes of a plurality of films in Example 1 and fish eyes of a plurality of films in Comparative Example 1 were respectively counted. The maximum value, minimum value and average of the numbers of fish eyes in Example 1, and the maximum value, minimum value and average of the numbers of fish eyes in Comparative Example 1 were shown in Table 1. Furthermore, the number of fish eyes per film in Example 1 was shown in Fig. 6, while the number of fish eyes per film in Comparative Example 1 was shown in Fig. 7.
From the results, in Example 1, it was found that generation of fish eyes was greatly reduced, as compared to Comparative Example 1.
In Comparative Example 1, the resin pellets used in step 3, fines (fine powder) generated by breaking of resin pellets, rust in a pipe, and dust mixed from the opening arranged in the middle between the resin pellet supply device and the extrusion molding machine were remained in the supply device for supplying resin pellets and the pipe for connecting the supply device and the extrusion molding machine 2, which were then considered to be attached to the resin pellets used in step 4. Thus, it was considered that fish eyes were produced in large quantities.
On the other hand, in Example 1, the cleaning device 1 was arranged between the supply device for supplying resin pellets and the extrusion molding machine 2. Thus, even though resin pellets used in step 1 were remained in the supply device, the pipe or the like, and attached to the resin pellets in step 2 as foreign matters, foreign matters were removed by cleaning resin pellets using the cleaning device 1. Accordingly, it was considered that generation of fish eyes could be greatly reduced.

Meanwhile, in step 2 of Example 1, the amount of water content in resin pellets immediately after discharged from the cleaning device was measured. The amount of water content was about 80 ppm, and it was substantially equal to the amount of water content in resin pellets before cleaning.
Furthermore, in the film obtained in step 2, foaming caused by the water content in resin pellets and occurrence of defects were not found.
Accordingly, it was found that resin pellets were not swollen by the action of cleaning using the cleaning device 1.

Furthermore, the size and shape of resin pellets before cleaning in step 2 and those of resin pellets after cleaning were observed by visual observation and by a microscope and as a result, it was found that the size and shape were the same, and the resin pellets were not ground in the cleaning process by means of the cleaning device 1.

### Example 2

A film was formed using the device illustrated in Fig. 3 in the same manner as in Example 1, except that the amount of water (the amount of water supplied to the first tube body 141) for cleaning in step 2 was changed to 70% by weight based on the weight of resin pellets.
The resin pellets used were the same as those in Example 1.
The steps 1 and 2 were repeatedly carried out in the same manner as in Example 1 to obtain a plurality of films in respective steps.

### Example 3

The same procedure was carried out in the same manner as in Example 2, except that the amount of water for cleaning in step 2 was changed to 170% by weight based on the weight of resin pellets.

### Comparative Example 2

A film was formed in the same manner as in Comparative Example 1, and a plurality of films were obtained in respective steps 3 and 4.

### Results

In the same manner as in Example 1 and Comparative Example 1, fish eyes of a plurality of films (Example 2: 50 pieces, Example 3: 50 pieces) obtained in step 2 of Examples 2 and 3, and fish eyes of a plurality of films (9 pieces) obtained in step 4 of Comparative Example 2 were measured. The results are shown in Table 2. The numbers of fish eyes in Table 2 were the maximum values and the minimum values in Examples 2, 3 and Comparative Example 2.
Furthermore, in Comparative Example 2, a film was formed under the same conditions as in Comparative Example 1, but the numbers different from those of Comparative Example 1 were resulted because of the different numbers of films obtained in step 4.

**[Table 2]**

| **Example 2 (per 1 m²)** | **Example 3 (per 1 m²)** | **Comparative Example 2 (per 1 m²)** |
|---|---|---|
| 17 ~ 19 | 40 ~ 60 | 127 ~ 196 |

Thus, in Examples 2 and 3, it was found that generation of fish eyes could be greatly reduced, as compared to Comparative Example 2.

When Examples 2 and 3 were compared, it was found that the numbers of fish eyes in Example 2 were smaller than those of Example 3.

As a result of review by the present inventors, it was found that, by setting the amount of water to not more than 80% by weight and particularly preferably to not more than 70% by weight based on the weight of resin pellets, the number of fish eyes could be reliably reduced.
Also, the present inventors have used resin pellets composed of different kinds from the aforementioned Examples 1 to 3 (specifically, low density polyethylene or ethylene-α-olefin copolymer elastomer), and have cleaned resin pellets in the same manner as in Examples 1, 2 and 3 respectively to form a film and as a result, an effect of reduced fish eyes could be achieved in the same manner.

## Claims

1. A method for cleaning resin pellets, comprising:
introducing said resin pellets and water into a first tube body; and
conveying said resin pellets and said water toward a discharge opening in said first tube body, and simultaneously cleaning said resin pellets by removing foreign matters from the surfaces of said resin pellets by water flow.

2. The method for cleaning resin pellets as set forth in claim 1, wherein, in said cleaning the resin pellets, said water is supplied into said first tube body in an amount of not more than 80% by weight based on the weight of said resin pellets.

3. The method for cleaning resin pellets as set forth in claim 2, wherein, in said cleaning the resin pellets, said foreign matters are removed from the surfaces of said resin pellets by said water flow and the collision of said resin pellets with each other in said first tube body.

4. The method for cleaning resin pellets as set forth in any one of claims 1 to 3, further comprising:
supplying, into a second tube body equipped with a screw, said resin pellets and said water discharged from said first tube body; and
conveying said resin pellets and said water by means of said screw in said second tube body, and separating said resin pellets and said water by the centrifugal force generated by the rotation of said second tube body.

5. The method for cleaning resin pellets as set forth in claim 4, further comprising:
drying said resin pellets separated from said water.

6. The method for cleaning resin pellets as set forth in any one of claims 1 to 5, wherein said resin pellets are sticky resin pellets.

7. A method for forming a resin, wherein resin pellets are cleaned in the cleaning method as set forth in any one of claims 1 to 6, and thereafter said resin pellets are supplied to a melt molding device for forming resin pellets.

8. The method for forming a resin as set forth in claim 7, wherein an optical film or an optical sheet is formed using said melt molding device.

9. The method for forming a resin as set forth in claim 7, wherein said melt molding device is an extrusion molding device or an injection molding device.

10. The method for forming a resin as set forth in claim 7, wherein said melt molding device is used for molding a coating material for an electric wire, and a coating material for an electric wire is formed using said melt molding device.

11. A method for filling resin pellets, comprising:
cleaning (co) polymer resin pellets produced by a polymerization process in the cleaning method as set forth in any one of claims 1 to 6 before filling in a transportation container; and
filling said cleaned resin pellets in said transportation container.

12. The method for filling resin pellets as set forth in claim 11, wherein said (co)polymer resin pellets are resin pellets of an ethylene copolymer produced by a high-pressure polymerization process.

13. A method for analyzing resin pellets, comprising:
supplying at least a part of resin pellets produced in resin pellets manufacturing apparatus to a cleaning device connected to said manufacturing apparatus, and cleaning said resin pellets in the cleaning method as set forth in any one of claims 1 to 6; and
supplying said resin pellets to an analyzing device connected to said cleaning device, and analyzing said resin pellets with said analyzing device.

14. The method for cleaning resin pellets as set forth in any one of claims 1 to 6, wherein said cleaning method is for the purpose of reducing fish eyes produced in a sheet or a film to be formed using said cleaned resin pellets.

15. A method for reducing fish eyes, wherein said resin pellets cleaned in the cleaning method as set forth in any one of claims 1 to 6 are used to form a sheet or a film, such that the number of fish eyes produced in said sheet or said film is not more than 60 per 1 m².
